# FASCICULE DE BREVET EUROPEEN

(11) **EP 2 330 474 B1**
(45) Date de publication et mention de la délivrance du brevet: **24.10.2012**
(21) Numéro de dépôt: 10191998.3
(22) Date de dépôt: 22.11.2010
(51) Int. Cl.: G05D 1/10

(54) **Procédé et dispositif pour déterminer une trajectoire de décollage permettant de maximiser la masse au décollage d'un aéronef.**
Verfahren und Vorrichtung zur Ermittlung einer Startflugbahn, die das Startgewicht eines Flugzeugs zu maximieren erlaubt
Method and device for determining a takeoff trajectory that allows the maximization of the takeoff weight of an aircraft

(30) Priorité: 02.12.2009 FR 0905820
(43) Date de publication de la demande: 08.06.2011
(73) Titulaire: Airbus Opérations SAS, 31060 Toulouse (FR)
(72) Inventeur: Laporte, Serge, 32600, Aurade (FR); Talgorn, Bastien, 31400, Toulouse (FR)
(74) Mandataire: Gevers France

(56) Documents cités:
- FR-A1- 2 893 146
- FR-A1- 2 909 460

## Description

La présente invention concerne un procédé et un dispositif pour déterminer une trajectoire de décollage d'un aéronef permettant de maximiser la masse au décollage de l'aéronef, en particulier d'un avion de transport.

FR 2 893 146 est un exemple de système pour déterminer une trajectoire auxiliaire de vol.

On sait que le décollage des aéronefs doit satisfaire à des exigences de sécurité définies par la réglementation aérienne. En particulier, lorsqu'une panne d'un moteur survient lors du décollage d'un aéronef, il est nécessaire de s'assurer que le survol d'obstacles tels que des montagnes, des antennes, des arbres ou des bâtiments, qui sont situés à proximité de la piste de décollage le long de la trajectoire suivie par l'aéronef, reste possible, et ceci avec une marge de sécurité suffisante.

Une telle contrainte peut obliger l'équipage à limiter la masse maximale au décollage de l'aéronef, afin de permettre à ce dernier de générer une pente de montée suffisante pour éviter les obstacles.

Pour réduire l'importance de cette contrainte sur la valeur de la masse maximale, on détermine, en plus d'une trajectoire de décollage standard rectiligne (communément désignée par l'acronyme anglais SID, pour « Standard Instrument Departure ») qui est prévue pour un décollage de l'aéronef sans panne moteur, une trajectoire de décollage auxiliaire (communément désignée par l'acronyme anglais EOSID, pour « Engine Out Standard Instrument Departure ») permettant un décollage avec un moteur en panne. Cette trajectoire de décollage auxiliaire diverge, à un point de divergence, de la trajectoire de décollage standard (qui est donc définie pour un aéronef dont tous les moteurs fonctionnent normalement). Lesdites trajectoires de décollage (standard et auxiliaire) permettent de survoler les obstacles situés le long de leurs profils latéraux respectifs. La trajectoire de décollage auxiliaire qui permet de contourner des obstacles élevés autorise donc une masse maximale au décollage plus importante que la trajectoire de décollage standard.

Ledit point de divergence est défini de sorte que si une panne d'un moteur survient en amont (ou au niveau) de ce point de divergence, le pilote fait bifurquer l'aéronef sur la trajectoire de décollage auxiliaire lorsque l'aéronef atteint ledit point de divergence. En revanche, si la panne moteur survient lorsque l'aéronef a dépassé le point de divergence, le pilote poursuit le décollage de l'aéronef sur la trajectoire de décollage standard.

Par ailleurs, on connaît une vitesse de décision qui est définie de sorte que, si une panne moteur survient au cours du roulage sur la piste en vue du décollage alors que l'aéronef n'a pas encore atteint cette vitesse de décision, la longueur de piste restante est suffisante pour permettre le freinage de l'aéronef et son arrêt dans les limites de la piste. En revanche, lorsqu'une panne moteur survient alors que la vitesse de l'aéronef est égale ou supérieure à cette vitesse de décision, l'aéronef n'est plus en mesure de s'arrêter sur la longueur de piste restante et doit donc poursuivre le décollage.

On connaît un procédé pour déterminer une trajectoire de décollage auxiliaire EOSID. Ce procédé est mis en oeuvre soit directement par des compagnies aériennes lorsqu'elles disposent d'un service capable de mener à bien cette tâche, soit par l'avionneur. Il s'agit d'une tâche laborieuse qui nécessite l'utilisation interactive de plusieurs logiciels spécifiques et peut nécessiter jusqu'à une semaine de travail pour une équipe spécialisée. Malgré l'utilisation de logiciels, ce procédé usuel suppose donc une intervention humaine importante et coûteuse.

En outre, ce procédé connu ne prend pas en compte, pour déterminer la trajectoire de décollage auxiliaire, une éventuelle panne moteur survenant à une vitesse de l'aéronef supérieure à la vitesse de décision. Or, dans cette situation, la vitesse effective de l'aéronef sur la trajectoire de décollage auxiliaire à partir du point de divergence est plus élevée que la vitesse de l'aéronef prévue pour une panne moteur survenant à la vitesse de décision.

Le rayon des virages étant une fonction croissante de la vitesse de l'aéronef et décroissante de l'angle de roulis de l'aéronef, le suivi des consignes de pilotage de la trajectoire de décollage auxiliaire nominale (c'est-à-dire établie pour une panne moteur survenant à la vitesse de décision), pour laquelle les virages sont réalisés à roulis constant, par exemple à 15 degrés, conduit à des rayons de virage plus importants que pour une panne à la vitesse de décision. Une panne moteur trop tardive peut ainsi conduire à une trajectoire de décollage auxiliaire effective, dont la trace au sol diffère sensiblement de celle de la trajectoire de décollage auxiliaire nominale, ce qui peut créer des risques de collision avec des obstacles, en particulier en zone montagneuse.

Par ailleurs, si on a trouvé une trajectoire de décollage auxiliaire qui permet le décollage de l'aéronef à une masse maximale élevée, il n'est pas garanti que l'aéronef puisse survoler avec cette masse maximale élevée les obstacles sur la trajectoire de décollage standard avec tous ses moteurs en fonctionnement, et a fortiori avec une panne moteur survenant après le point de divergence.

La présente invention a pour objet de remédier à ces inconvénients et de déterminer une trajectoire de décollage auxiliaire optimale concernant la masse maximale au décollage, tout en respectant les contraintes réglementaires (calculées pour une panne survenant à la vitesse de décision) et en garantissant le passage des obstacles pour une panne moteur survenant à un moment ultérieur quelconque.

Plus précisément, la présente invention concerne un procédé pour déterminer au moins une trajectoire de décollage auxiliaire d'un aéronef permettant de maximiser la masse au décollage de l'aéronef, ladite trajectoire de décollage auxiliaire présentant un profil latéral curviligne et divergeant à un point de divergence d'une trajectoire de décollage standard qui présente un profil latéral (généralement rectiligne) et qui est définie pour un aéronef dont tous les moteurs fonctionnent normalement, ladite trajectoire de décollage auxiliaire étant définie quant à elle pour un aéronef dont au moins un moteur est en panne, lesdites trajectoires de décollage permettant de survoler les obstacles situés le long de leurs profils latéraux respectifs.

A cet effet, selon l'invention, ledit procédé selon lequel :
a) on engendre des données initiales comprenant le profil latéral de la trajectoire de décollage standard, des données relatives à l'environnement de l'aéroport de décollage, et des conditions de décollage nominales ;
b) à l'aide desdites données initiales, on détermine une trajectoire de décollage auxiliaire, ainsi que des obstacles susceptibles d'être survolés pour les conditions de décollage nominales ; et
c) on présente les résultats des traitements réalisés à l'étape b) à un opérateur,
est remarquable en ce que l'étape b) est réalisée complètement de façon automatique, et en ce qu'à l'étape b), on réalise une optimisation de manière à obtenir une trajectoire de décollage auxiliaire optimale tenant compte de conditions de décollage variées (qui ne sont pas limitées aux seules conditions nominales), ainsi que des obstacles supplémentaires susceptibles d'être survolés pour des conditions de décollage non nominales.

Dans le cadre de la présente invention, les conditions de décollage nominales comprennent des conditions météorologiques (vent, température) et une configuration aérodynamique, particulières, dites nominales, qui représentent la situation prévue à l'avance, et elles prennent en compte une panne survenant à la vitesse de décision.

Ainsi, grâce à l'invention, on détermine de façon automatique la trajectoire (trajectoire de décollage auxiliaire) permettant de maximiser la masse au décollage de l'aéronef, ce qui permet de remédier au problème de charge de travail très élevée de la détermination usuelle de cette trajectoire.

De plus, selon l'invention, ledit procédé est optimisé de manière à obtenir une trajectoire de décollage auxiliaire optimale tenant compte de conditions de décollage variées (qui ne sont pas limitées aux seules conditions nominales). Il permet également d'obtenir des obstacles supplémentaires susceptibles d'être survolés pour des conditions de décollage non nominales (conditions météorologiques différentes des conditions météorologiques nominales, configuration aérodynamique différente de la configuration nominale, panne moteur survenant à une vitesse différente de la vitesse de décision).

Dans un mode de réalisation préféré, à l'étape b), on met en oeuvre, automatiquement, les étapes suivantes :
b1) à partir du profil latéral de la trajectoire de décollage standard, on détermine une masse maximale initiale et des vitesses caractéristiques initiales permettant de réaliser un décollage sur ladite trajectoire de décollage standard ;
b2) à l'aide d'un premier évaluateur (réalisant des traitements itératifs), on détermine une masse maximale de décollage et des vitesses caractéristiques associées relatives à une trajectoire auxiliaire donnée et à des conditions nominales, ainsi que des obstacles dimensionnants pour ces conditions nominales, ledit premier évaluateur utilisant à cet effet ladite masse maximale initiale et lesdites vitesses caractéristiques initiales, ainsi qu'un jeu d'obstacles additionnel et des consignes de pilotage décrivant une trajectoire de décollage auxiliaire ;
b3) on intègre ledit premier évaluateur dans un second évaluateur (réalisant également des traitements itératifs) qui permet d'identifier l'ensemble des obstacles dimensionnants pour des pannes survenant entre une vitesse de décision et la vitesse audit point de divergence pour la trajectoire de décollage auxiliaire et à la vitesse de divergence pour la trajectoire de décollage standard ; et
b4) on réalise une optimisation en modifiant la trajectoire de décollage auxiliaire utilisée à l'étape b2), et ceci jusqu'à obtenir une trajectoire de décollage auxiliaire optimale.

En outre, avantageusement, pour mettre en oeuvre l'étape b), on utilise des moyens de traitement de type génétique.

Le procédé conforme à la présente invention permet donc de déterminer une trajectoire de décollage auxiliaire optimale concernant la masse maximale au décollage, tout en respectant des contraintes réglementaires (calculées pour une panne survenant à la vitesse de décision) et en garantissant le passage des obstacles pour une panne moteur survenant à un moment ultérieur quelconque.

Par ailleurs, de façon avantageuse, à l'aide de ladite trajectoire de décollage auxiliaire optimale et desdits obstacles susceptibles d'être survolés, on calcule la masse maximale au décollage correspondant à un décollage le long de ladite trajectoire de décollage auxiliaire optimale obtenue de la manière précisée ci-dessus.

La présente invention concerne également un dispositif pour déterminer au moins une trajectoire de décollage auxiliaire d'un aéronef permettant de maximiser la masse au décollage de l'aéronef.

Selon l'invention, ledit dispositif du type comportant :
- des premiers moyens pour engendrer des données initiales comprenant le profil latéral de la trajectoire de décollage standard, des données relatives à l'environnement de l'aéroport de décollage, et des conditions de décollage nominales ;
- des deuxièmes moyens pour déterminer à l'aide desdites données initiales, une trajectoire de décollage auxiliaire, ainsi que des obstacles susceptibles d'être survolés pour les conditions de décollage minimales ; et
- des troisièmes moyens pour présenter les résultats des traitements réalisés par les deuxièmes moyens à un opérateur,
   est remarquable en ce que lesdits deuxièmes moyens sont complètement automatiques, et en ce que lesdits deuxièmes moyens comprennent des éléments pour réaliser une optimisation de manière à obtenir une trajectoire de décollage auxiliaire tenant compte de conditions de décollage variées, ainsi que des obstacles supplémentaires susceptibles d'être survolés pour des conditions de décollage non nominales.

Les figures du dessin annexé feront bien comprendre comment l'invention peut être réalisée. Sur ces figures, des références identiques désignent des éléments semblables.

La figure 1 est un graphique mettant en évidence différentes trajectoires de décollage susceptibles d'être suivies par un aéronef.

La figure 2 est le schéma synoptique d'un dispositif conforme à l'invention.

Les figures 3 et 4 montrent schématiquement différents moyens faisant partie d'un dispositif conforme à l'invention.

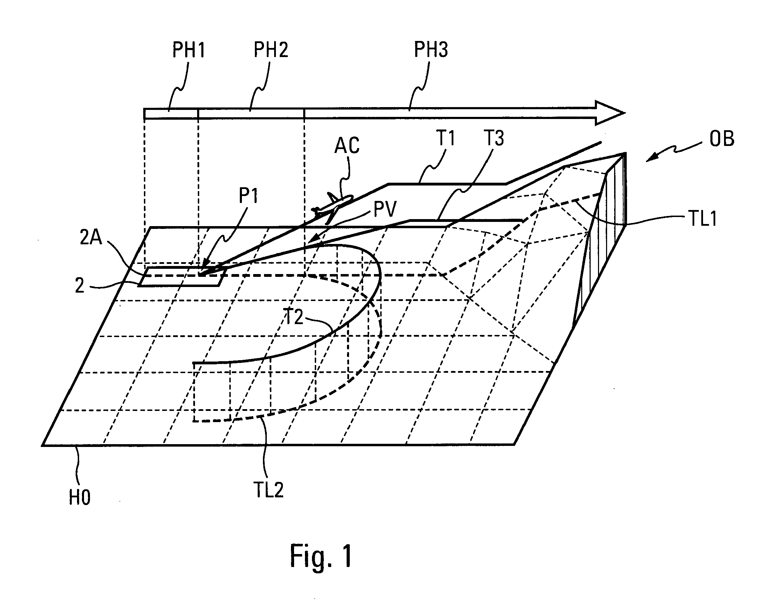

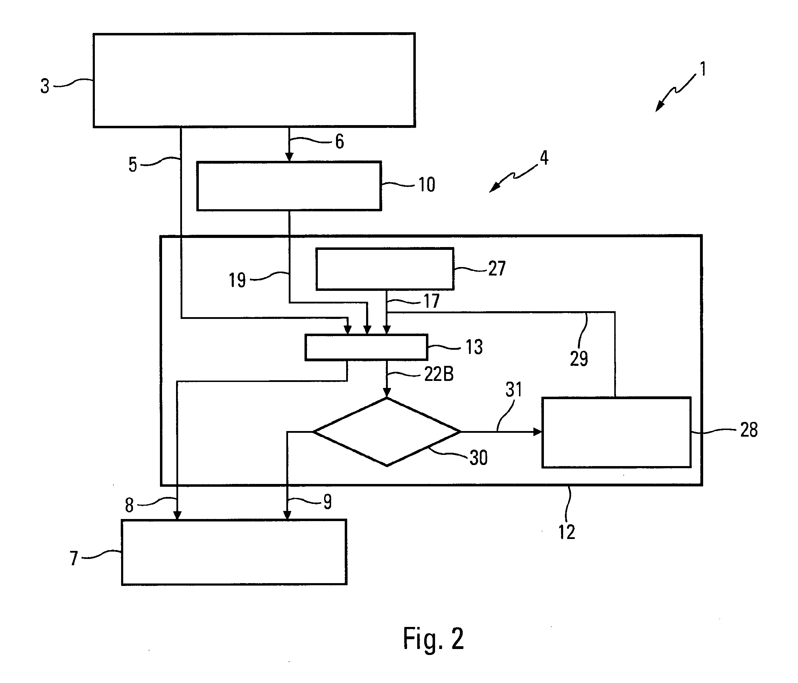

Le dispositif 1 conforme à l'invention et représenté schématiquement sur la figure 2 est destiné à déterminer au moins une trajectoire de décollage d'un aéronef, en particulier d'un avion de transport AC. La figure 1 illustre schématiquement le décollage d'un aéronef AC qui est réalisé à partir d'une piste de décollage 2, à proximité de laquelle se trouvent des obstacles OB, en l'occurrence une montagne ou une colline élevée. Généralement, le décollage de l'aéronef AC est réalisé suivant une trajectoire de décollage standard T1, dont le profil latéral TL1 (qui représente la projection verticale de la trajectoire T1 sur le sol comprenant un plan horizontal HO) est rectiligne et se prolonge selon l'axe 2A de la piste 2 utilisée pour le décollage. Cette trajectoire de décollage standard T1 est communément désignée par l'acronyme anglais SID, pour « Standard Instrument Departure ». Pour éviter à l'aéronef AC d'avoir à franchir les obstacles OB, on détermine également une trajectoire de décollage auxiliaire T2 (communément désignée par l'acronyme anglais EOSID, pour « Engine Out Standard Instrument Departure ») permettant de satisfaire les contraintes réglementaires en cas de panne moteur pendant le décollage. Cette trajectoire de décollage auxiliaire T2 de type EOSID diverge, à un point de divergence PV, de la trajectoire de décollage standard T1 de type SID (qui est définie pour un aéronef AC dont tous les moteurs fonctionnent normalement) et présente un profil latéral TL2 optimisé permettant de contourner des obstacles élevés. Lesdites trajectoires de décollage T1 et T2 (standard et auxiliaire) permettent de survoler les obstacles situés le long de leurs profils latéraux TL1 et TL2 respectifs. On notera que la trajectoire de décollage auxiliaire T2 qui permet de contourner des obstacles OB élevés autorise une masse maximale au décollage plus importante que la trajectoire de décollage standard T1.

La figure 1 montre également une trajectoire de décollage T3 de type SID, qui est définie dans l'axe 2A de la piste 2 et qui est suivie par l'aéronef AC lors d'une panne survenant à un point P1 auquel l'aéronef AC roule sur la piste 2 à une vitesse de décision V1 précisée ci-dessous. Dans ce cas, l'aéronef AC n'est pas en mesure de survoler les obstacles OB.

Ledit point de divergence PV est défini de sorte que si une panne d'un moteur survient en amont (ou au niveau) de ce point de divergence PV, le pilote fait bifurquer l'aéronef AC sur la trajectoire de décollage auxiliaire T2 lorsque l'aéronef AC atteint ce point de divergence PV. En revanche, si la panne moteur survient lorsque l'aéronef AC a dépassé le point de divergence PV, le pilote poursuit le décollage de l'aéronef AC sur la trajectoire de décollage standard de type SID.

Par ailleurs, ladite vitesse de décision V1 est définie de sorte que, si une panne moteur survient au cours du roulage sur la piste 2 en vue du décollage alors que l'aéronef AC n'a pas encore atteint cette vitesse de décision V1, c'est-à-dire en amont du point P1, la longueur de piste restante est suffisante pour permettre le freinage de l'aéronef AC et son arrêt dans les limites de la piste 2. En revanche, lorsqu'une panne moteur survient alors que la vitesse de l'aéronef AC est égale ou supérieure à cette vitesse de décision V1, l'aéronef AC n'est plus en mesure de s'arrêter sur la longueur de piste restante et doit donc poursuivre le décollage.

Par conséquent, trois cas (qui sont illustrés respectivement par des phases PH1, PH2 et PH3 sur la figure 1) sont à prendre en compte suivant l'instant où survient la panne moteur, à savoir :
- si la panne moteur survient avant que l'aéronef AC atteigne la vitesse de décision V1 (phase PH1), le pilote réalise un freinage et l'aéronef AC s'arrête dans les limites de la piste 2 ;
- si la panne moteur survient entre la vitesse de décision V1 et le point de divergence PV (phase PH2), ou en d'autres termes lorsque l'aéronef AC se trouve entre le point P1 et le point de divergence PV, le pilote continue le décollage et bifurque sur la trajectoire de décollage auxiliaire T2 de type EOSID, lorsqu'il atteint le point de divergence PV ; et
- si la panne moteur survient après le point de divergence PV (phase PH3), le pilote poursuit son décollage sur la trajectoire de décollage standard de type SID.

Bien entendu, en l'absence de panne moteur, le pilote réalise un décollage standard le long de la trajectoire de décollage standard T1 (de type SID) qui a été définie pour un décollage sans panne moteur, suivant une trajectoire latérale TL1, de préférence rectiligne (mais non exclusivement).

Le dispositif 1 conforme à l'invention a pour objet de déterminer une trajectoire de décollage auxiliaire T2 optimale concernant la masse maximale au décollage, tout en respectant les contraintes réglementaires (calculées pour une panne survenant à la vitesse de décision V1) et en garantissant le passage des obstacles OB pour une panne moteur survenant à un moment ultérieur quelconque.

A cet effet, ledit dispositif 1 comporte, comme représenté sur la figure 2:
- des moyens 3 pour engendrer des données initiales comprenant le profil latéral de la trajectoire de décollage standard, des données relatives à l'environnement de l'aéroport de décollage, et des conditions de décollage nominales. Ces moyens 3 sont, de préférence, des moyens d'interface permettant à un opérateur d'entrer dans le dispositif 1 les informations précitées, en particulier un clavier d'ordinateur et/ou une souris associés à un écran ;
- des moyens 4 qui sont reliés par l'intermédiaire de liaisons 5 et 6 auxdits moyens 3 et qui sont formés de manière à déterminer automatiquement à l'aide desdites données initiales, une trajectoire de décollage auxiliaire EOSID, ainsi que des obstacles OB susceptibles d'être survolés pour les conditions de décollage nominales ; et
- des moyens 7 qui sont reliés par l'intermédiaire de liaisons 8 et 9 auxdits moyens 4 et qui sont formés de manière à présenter automatiquement les résultats des traitements réalisés par lesdits moyens 4 à un opérateur de l'aéronef AC, en particulier au pilote dudit aéronef AC.

Selon l'invention, lesdits deuxièmes moyens 4 sont complètement automatiques, et ils comprennent notamment des moyens 12 pour réaliser une optimisation de manière à obtenir une trajectoire de décollage auxiliaire T2 tenant compte de conditions de décollage variées, ainsi que des obstacles supplémentaires OB susceptibles d'être survolés pour des conditions de décollage non nominales.

Ainsi, le dispositif 1 conforme à l'invention détermine de façon automatique la trajectoire (trajectoire de décollage auxiliaire T2) permettant de maximiser la masse au décollage de l'aéronef AC, ce qui permet de réduire la charge de travail d'un opérateur utilisant ledit dispositif 1, à la simple entrée de données à l'aide des moyens 3.

Lesdits moyens 3 permettent d'entrer les données suivantes :
- des données du terrain et de ses environs présentant le relief et les obstacles OB (courbes de niveau, c'est-à-dire l'altitude ou la hauteur par rapport à la piste 2) ;
- des caractéristiques de la piste de décollage 2, telles que sa longueur, fournies par exemple par des cartes usuelles de type Jeppessen ;
- le profil latéral de la trajectoire SID, fourni par exemple par des cartes usuelles de type Jeppessen ; et
- des conditions de décollage nominales (conditions météorologiques, configuration aérodynamique de l'aéronef AC).

Lesdits moyens 4 comportent des moyens 10 pour calculer automatiquement les caractéristiques du décollage selon le profil latéral de la trajectoire SID, fourni par les moyens 3. Lesdits moyens 10 permettent de déterminer la masse la plus élevée qui permet de respecter l'ensemble des contraintes réglementaires du manuel de vol lors d'un décollage suivant ladite trajectoire SID. Plus précisément, lesdits moyens 10 déterminent, de façon usuelle, à l'aide d'un logiciel connu, pour les données entrées relatives à la trajectoire SID :
- la masse maximale au décollage ; et
- des vitesses caractéristiques du décollage, à savoir :
   ■ ladite vitesse de décision V1 ;
   ■ une vitesse de rotation VR au décollage ; et
   ■ une vitesse V2 qui représente la vitesse de l'aéronef AC à une hauteur de 35 pieds au-dessus du sol avec un moteur en panne.

Ces données calculées par les moyens 10 sont nommées, respectivement, masse initiale et vitesses caractéristiques initiales.

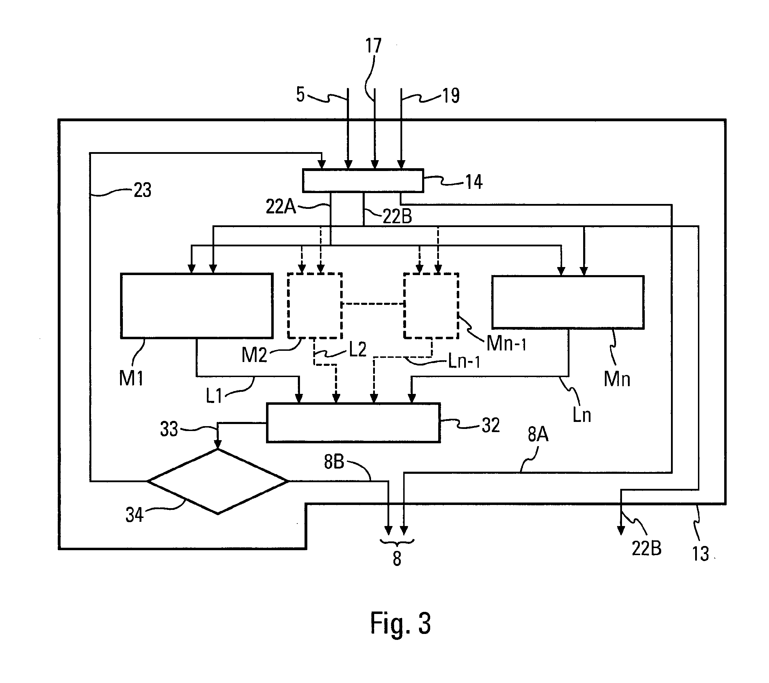

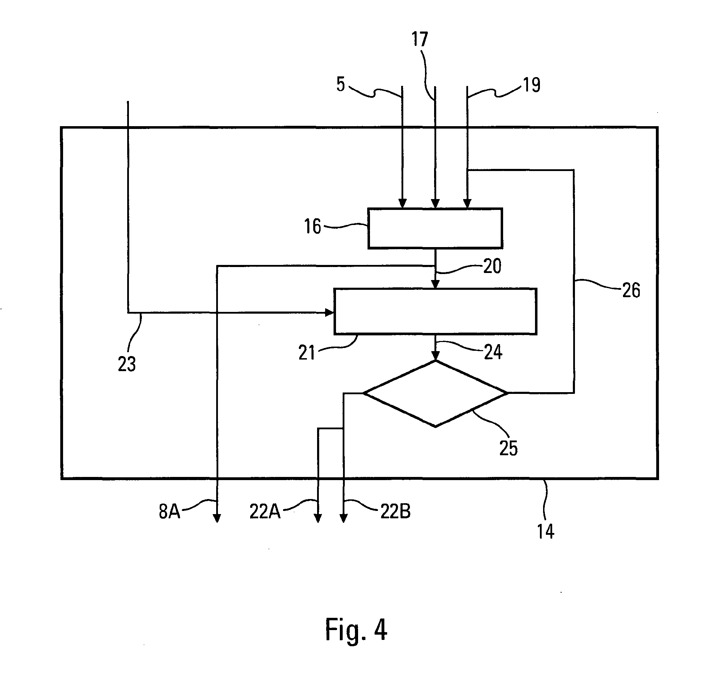

Lesdits moyens 4 comportent, de plus, des moyens d'optimisation automatiques 12 qui comprennent un évaluateur 13 qui est représenté sur la figure 3. Cet évaluateur 13 est, quant à lui, pourvu d'un évaluateur 14 qui est représenté sur la figure 4.

Ledit évaluateur 14 comporte des moyens 16 qui reçoivent :
- par l'intermédiaire de la liaison 5, les conditions de décollage nominales, entrées par l'opérateur ;
- par l'intermédiaire d'une liaison 17, une trajectoire EOSID précisée ci-dessous (qui est définie, de façon usuelle, sous la forme d'une séquence d'instructions de pilotage) ; et
- par l'intermédiaire d'une liaison 19 qui est reliée auxdits moyens 10, la masse initiale et les vitesses caractéristiques initiales déterminées par lesdits moyens 10.

Ces moyens 16 calculent, à partir de la masse maximale et de la vitesse V2 de l'aéronef AC en fin de décollage, le profil latéral nominal de la trajectoire EOSID qui en résulte, ainsi qu'un jeu d'obstacles nominal (c'est-à-dire un ensemble d'obstacles susceptibles d'être survolés). Ces informations sont transmises par l'intermédiaire d'une liaison 20 à des moyens 21. De plus, ledit jeu d'obstacles nominal est transmis par l'intermédiaire d'une liaison 8A à la sortie de l'évaluateur 13.

Lesdits moyens 21 calculent, à partir des informations reçues desdits moyens 16 et d'obstacles supplémentaires (précisés ci-dessous) reçus par l'intermédiaire d'une liaison 23, la masse maximale, ainsi que les vitesses caractéristiques V1, VR et V2 associées qui garantissent le respect des contraintes réglementaires. Ces informations sont transmises par l'intermédiaire d'une liaison 24 à des moyens 25 qui vérifient s'il existe une convergence sur la masse et les vitesses. En cas de réponse positive, ces moyens 25 transmettent la masse maximale et les vitesses caractéristiques reçues desdits moyens 21, par l'intermédiaire de liaisons 22A et 22B. En revanche, en cas de réponse négative, lesdits moyens 25 retransmettent ces informations via une liaison 26 auxdits moyens 16 qui recommencent les traitements précités. Ces traitements sont donc réalisés de façon itérative jusqu'à obtenir une convergence sur la masse et les vitesses caractéristiques.

Dans le cadre de la présente invention, on considère qu'il existe une convergence sur un paramètre lorsque la valeur de ce paramètre, qui sort d'une boucle de calcul, converge vers la valeur entrée précédemment dans cette boucle, c'est-à-dire lorsque la différence entre ces deux valeurs (entrante et sortante) est inférieure à un seuil prédéterminé.

L'évaluateur 14 fournit donc, à partir d'un ensemble de consignes de pilotage, décrivant une trajectoire EOSID, et d'un jeu d'obstacles supplémentaire reçu par l'intermédiaire de la liaison 23, la masse maximale au décollage et les vitesses caractéristiques V1, VR et V2 associées permettant de vérifier l'ensemble des contraintes réglementaires (pour une panne à la vitesse de décision V1), ainsi que l'ensemble des obstacles dimensionnants sur la trajectoire nominale.

Cet évaluateur 14 est intégré au sein d'une boucle destinée à identifier l'ensemble des obstacles dimensionnants pour des pannes moteur survenant après la vitesse de décision V1. L'ensemble ainsi constitué forme l'évaluateur 13 de la figure 3.

Cet évaluateur 13 comporte, en plus dudit évaluateur 14, un ensemble de moyens de calcul M1, M2, ..., Mn-1, Mn usuels qui fournissent à leur sortie à des moyens 32, via respectivement des liaisons L1, L2, ..., Ln-1, Ln, un jeu d'obstacles supplémentaire défini pour des conditions non nominales.

Lesdits moyens M1 à Mn-1 calculent chacun, de façon usuelle, une trajectoire EOSID respectivement pour l'un d'une pluralité d'instants de panne, par exemple pour dix instants de panne, compris entre les points P1 et PV et fournissent à leurs sorties les obstacles correspondants. Ces n-1 instants de panne différents (utilisés respectivement par les moyens M1 à Mn-1) peuvent être :
- des instants prédéterminés ; ou
- des instants choisis arbitrairement ; ou
- des instants correspondant à des points répartis, par exemple uniformément, entre les points P1 et PV.

En outre, lesdits moyens Mn calculent, de façon usuelle, la trajectoire SID pour une panne moteur survenant au point de divergence PV, et fournissent les obstacles correspondants susceptibles d'être survolés dans ces conditions.

Les moyens 32 transmettent ce jeu d'obstacles supplémentaire, par l'intermédiaire d'une liaison 33, à des moyens 34 qui vérifient la convergence dudit jeu d'obstacles. En cas de réponse positive, ces obstacles sont transmis par l'intermédiaire d'une liaison 8B conjointement au jeu d'obstacles nominal reçu de l'évaluateur 14 par l'intermédiaire de la liaison 8A, lesdites liaisons 8A et 8B formant la liaison 8. En revanche, en cas de réponse négative, ce jeu d'obstacles supplémentaire est réinjecté dans l'évaluateur 14 par l'intermédiaire de la liaison 23. Et on recommence les traitements précités jusqu'à obtenir une convergence sur le jeu d'obstacles.

Par ailleurs, comme représenté sur la figure 2, lesdits moyens 12 comportent, en plus de l'évaluateur 13, des moyens 27 usuels pour déterminer de manière aléatoire une population de trajectoires EOSID initiale.

L'évaluateur 13 permet d'associer à un candidat EOSID une masse maximale correspondant au décollage nominal et prenant en compte des obstacles supplémentaires, en cas de panne survenant après la vitesse de décision V1. Cet évaluateur 13 constitue la fonction d'évaluation qui est utilisée dans la boucle d'optimisation mise en oeuvre dans les moyens 12, à l'aide notamment de moyens 28 qui comprennent un algorithme d'optimisation globale et qui modifient la population d'EOSID transmise à l'évaluateur 13 par l'intermédiaire d'une liaison 29. La masse maximale déterminée par l'évaluateur 13 est fournie par l'intermédiaire de la liaison 22B à des moyens 30 qui vérifient la convergence sur la masse. En cas de réponse positive, ils transmettent la trajectoire EOSID optimale, par l'intermédiaire de la liaison 9, auxdits moyens 7. En revanche, en cas de réponse négative, ils informent les moyens 28 par l'intermédiaire d'une liaison 31 pour que ces derniers modifient la population d'EOSID utilisée par l'évaluateur 13. Ces derniers traitements sont réalisés, de façon itérative, jusqu'à obtenir une convergence sur la masse.

L'optimisation mise en oeuvre par les moyens 4 utilise, de préférence, un algorithme génétique qui présente la double particularité de fournir une solution optimale réellement indépendante de la solution initiale qui lui est transmise, et d'engendrer, non pas une solution unique, mais une famille de solutions différentes de bonne qualité.

Le dispositif 1 conforme à l'invention permet donc de trouver des trajectoires de décollage auxiliaires présentant de meilleures qualités, tant du point de vue de la masse maximale, que de celui de la sécurité, dans la mesure où il permet d'envisager de nombreuses conditions de décollage différentes, en particulier en ce qui concerne les instants de panne.

On notera en outre que la présente invention :
- introduit au sein même de la boucle d'optimisation de l'EOSID, la vérification de la possibilité de survoler les obstacles sur la trajectoire EOSID pour une panne moteur survenant entre la vitesse de décision V1 et le point de divergence PV, et sur la trajectoire de décollage standard SID pour une panne survenant après le point de divergence PV. Ainsi, non seulement d'autres cas que les pannes à la vitesse de décision V1 et au point de convergence PV sont pris en compte pour le calcul du critère optimisé, mais en outre les pénalités que ces autres cas induisent en termes de masse au décollage sont minimisées ; et
- met en oeuvre un algorithme d'optimisation global qui permet :
   ■ de conduire à la meilleure solution sans qu'il soit nécessaire de préjuger a priori de l'allure de la trajectoire ; et
   ■ de fournir plusieurs solutions alternatives, voisines de la solution optimale du point de vue de la masse maximale, mais pas nécessairement du point de vue de leur profil latéral.

Ainsi, on peut mettre en oeuvre une analyse de robustesse sur les trajectoires qui sont les plus pertinentes, afin de choisir celle qui conduit à la plus grande masse décollable moyenne, pour l'ensemble des conditions de décollage possibles (conditions météorologiques, configuration aérodynamique).

Le dispositif 1 comporte également des moyens (non représentés et faisant par exemple partie des moyens 7) pour calculer la masse maximale au décollage, à l'aide de la trajectoire de décollage auxiliaire optimale et des obstacles susceptibles d'être survolés, déterminés par lesdits moyens 4.

## Revendications

1. Procédé pour déterminer au moins une trajectoire de décollage auxiliaire (T2) d'un aéronef (AC) permettant de maximiser la masse au décollage de l'aéronef (AC), ladite trajectoire de décollage auxiliaire (T2) présentant un profil latéral (TL2) curviligne et divergeant à un point de divergence (PV) d'une trajectoire de décollage standard (T1) qui présente un profil latéral (TL1) et qui est définie pour un aéronef (AC) dont tous les moteurs fonctionnent normalement, ladite trajectoire de décollage auxiliaire (T2) étant définie quant à elle pour un aéronef (AC) dont au moins un moteur est en panne, lesdites trajectoires de décollage (T1, T2) permettant de survoler les obstacles (OB) situés le long de leurs profils latéraux (TL1, TL2) respectifs, procédé selon lequel :
a) on engendre des données initiales comprenant le profil latéral de la trajectoire de décollage standard, des données relatives à l'environnement de l'aéroport de décollage, et des conditions de décollage nominales ;
b) à l'aide desdites données initiales, on détermine une trajectoire de décollage auxiliaire (T2), ainsi que des obstacles (OB) susceptibles d'être survolés pour les conditions de décollage nominales ; et
c) on présente les résultats des traitements réalisés à l'étape b) à un opérateur,
**caractérisé en ce que** l'étape b) est réalisée complètement de façon automatique, et **en ce qu'**à l'étape b), on réalise une optimisation de manière à obtenir une trajectoire de décollage auxiliaire optimale (T2) tenant compte de conditions de décollage variées, ainsi que des obstacles supplémentaires (OB) susceptibles d'être survolés pour des conditions de décollage non nominales.

2. Procédé selon la revendication 1,
**caractérisé en ce qu'**à l'étape b), on met en oeuvre automatiquement les étapes suivantes :
b1) à partir du profil latéral de la trajectoire de décollage standard, on détermine une masse maximale initiale et des vitesses caractéristiques initiales permettant de réaliser un décollage sur ladite trajectoire de décollage standard ;
b2) à l'aide d'un premier évaluateur (14), on détermine une masse maximale de décollage et des vitesses caractéristiques associées relatives à une trajectoire auxiliaire donnée et à des conditions nominales, ainsi que des obstacles dimensionnants pour ces conditions nominales, ledit premier évaluateur (14) utilisant à cet effet ladite masse maximale initiale et lesdites vitesses caractéristiques initiales, ainsi qu'un jeu d'obstacles additionnel et des consignes de pilotage décrivant une trajectoire de décollage auxiliaire ;
b3) on intègre ledit premier évaluateur (14) dans un second évaluateur (13) qui permet d'identifier l'ensemble des obstacles dimensionnants pour des pannes survenant entre une vitesse de décision et la vitesse audit point de divergence pour la trajectoire de décollage auxiliaire et à la vitesse de divergence pour la trajectoire de décollage standard ; et
b4) on réalise une optimisation en modifiant la trajectoire de décollage auxiliaire utilisée à l'étape b2), et ceci jusqu'à obtenir une trajectoire de décollage auxiliaire (T2) optimale.

3. Procédé selon l'une des revendications 1 et 2,
**caractérisé en ce que** pour mettre en oeuvre l'étape b), on utilise des moyens de traitement de type génétique.

4. Procédé selon l'une quelconque des revendications précédentes,
**caractérisé en ce qu'**à l'aide de ladite trajectoire de décollage auxiliaire optimale et desdits obstacles susceptibles d'être survolés, on calcule la masse maximale au décollage correspondante.

5. Dispositif pour déterminer au moins une trajectoire de décollage auxiliaire (T2) d'un aéronef (AC) permettant de maximiser la masse au décollage de l'aéronef (AC), ladite trajectoire de décollage auxiliaire (T2) présentant un profil latéral (TL2) curviligne et divergeant à un point de divergence (PV) d'une trajectoire de décollage standard (T1) qui présente un profil latéral (TL1) et qui est définie pour un aéronef (AC) dont tous les moteurs fonctionnent normalement, ladite trajectoire de décollage auxiliaire (T2) étant définie quant à elle pour un aéronef (AC) dont au moins un moteur est en panne, lesdites trajectoires de décollage (T1, T2) permettant de survoler les obstacles (OB) situés le long de leurs profils latéraux (TL1, TL2) respectifs, ledit dispositif (1) comportant :
- des premiers moyens (3) pour engendrer des données initiales comprenant le profil latéral de la trajectoire de décollage standard, des données relatives à l'environnement de l'aéroport de décollage, et des conditions de décollage nominales ;
- des deuxièmes moyens (4) pour déterminer à l'aide desdites données initiales, une trajectoire de décollage auxiliaire (T2), ainsi que des obstacles (OB) susceptibles d'être survolés pour les conditions de décollage nominales ; et
- des troisièmes moyens (7) pour présenter à un opérateur les résultats des traitements réalisés par les deuxièmes moyens (4),
**caractérisé en ce que** lesdits deuxièmes moyens (4) sont complètement automatiques, et **en ce que** lesdits deuxièmes moyens (4) comprennent des éléments (12) pour réaliser une optimisation de manière à obtenir une trajectoire de décollage auxiliaire (T2) tenant compte de conditions de décollage variées, ainsi que des obstacles supplémentaires (OB) susceptibles d'être survolés pour des conditions de décollage non nominales.

## Claims

1. A method for determining at least one auxiliary takeoff trajectory (T2) of an aircraft (AC) for maximizing the takeoff weight of the aircraft (AC), said auxiliary takeoff trajectory (T2) comprising a curvilinear lateral profile (TL2) and diverging at a divergence point (PV) from a standard takeoff trajectory (T1) comprising a lateral profile (TL1) and being defined for an aircraft (AC) having all its engines operating normally, said auxiliary takeoff trajectory (T2) being defined in turn for an aircraft (AC) having at least one engine being defective, said takeoff trajectories (T1, T2) allowing to fly over obstacles (OB) located along their respective lateral profiles (TL1, TL2), said method wherein:
a) initial data comprising the lateral profile of the standard takeoff trajectory, data relating to the environment of the takeoff airport, and nominal takeoff conditions are generated;
b) based on said initial data, an auxiliary takeoff trajectory (T2) is determined, as well as obstacles (OB) likely to be flown over for the nominal takeoff conditions; and
c) the results of the processings carried out at step b) are presented to an operator,
**characterized in that** step b) is carried out completely automatically, and **in that** at step b), an optimization is carried out so as to obtain an optimum auxiliary takeoff trajectory (T2) taking into consideration various takeoff conditions, as well as additional obstacles (OB) likely to be flown over for non nominal takeoff conditions.

2. The method according to claim 1,
**characterized in that** at step b), the following steps are automatically implemented:
b1) from the lateral profile of the standard takeoff trajectory, an initial maximum weight and initial characteristic speeds are determined allowing to carry out a takeoff on said standard takeoff trajectory;
b2) by means of a first evaluator (14), a maximum takeoff weight and associated characteristic speeds are determined, relating to a given auxiliary trajectory and to nominal conditions, as well as dimensioning obstacles for such nominal conditions, said first evaluator (14) using, to this end, said initial maximum weight and said initial characteristic speeds, as well as an additional set of obstacles and piloting instructions describing an auxiliary takeoff trajectory;
b3) said first evaluator is integrated into a second evaluator allowing to identify the set of dimensioning obstacles for breakdowns occurring between a decision speed and the speed at said divergence point for the auxiliary takeoff trajectory and at the divergence speed for the standard takeoff trajectory; and
b4) an optimization is carried out modifying the auxiliary takeoff trajectory used at step b2), and this, until an optimum auxiliary takeoff trajectory is obtained.

3. The method according to any of claims 1 and 2,
**characterized in that**, for implementing step b), processing means of the genetic type are used.

4. The method according to any one of the precedent claims,
**characterized in that**, using said optimum auxiliary takeoff trajectory and said obstacles likely to be flown over, the corresponding maximum takeoff weight is calculated.

5. A device for determining at least one auxiliary takeoff trajectory (T2) of an aircraft (AC) for maximizing the takeoff weight of the aircraft (AC), said auxiliary takeoff trajectory (T2) comprising a curvilinear lateral profile (TL2) and diverging at a divergence point (PV) from a standard takeoff trajectory (T1) comprising a lateral profile (TL1) and being defined for an aircraft (AC) having all its engines operating normally, said auxiliary takeoff trajectory (T2) being defined in turn for an aircraft (AC) having at least one engine being defective, said takeoff trajectories (T1, T2) allowing to fly over obstacles (OB) located along their respective lateral profiles (TL1, TL2), said device (1) comprising:
- first means (3) for generating initial data comprising the lateral profile of the standard takeoff trajectory, data relating to the environment of the takeoff airport, and nominal takeoff conditions;
- second means (4) for determining, based on said initial data, an auxiliary takeoff trajectory (T2), as well as obstacles (OB) likely to be flown over for the nominal takeoff conditions; and
- third means (7) for presenting to an operator the results of the processings carried out by the second means (4),
**characterized in that** said second means (4) are completely automatic, and **in that** said second means (4) comprise elements (12) for carrying out an optimization so as to obtain an auxiliary takeoff trajectory (T2) taking into consideration various takeoff conditions, as well as additional obstacles (OB) likely to be flown over for non nominal takeoff conditions.

## Patentansprüche

1. Verfahren zum Bestimmen mindestens einer Hilfs-Abflugbahn (T2) eines Flugzeugs (AC), mit der die Masse beim Abflug des Flugzeugs (AC) maximiert werden kann, wobei die Hilfs-Abflugbahn (T2) ein Seitenprofil (TL2) aufweist, das gekrümmt ist und an einem Divergenzpunkt (PV) von einer Standard-Abflugbahn (T1), die ein Seitenprofil (TL1) aufweist und die für ein Flugzeug (AC) festgelegt ist, bei dem alle Triebwerke normal funktionieren, divergiert, wobei die Hilfs-Abflugbahn (T2) ihrerseits für ein Flugzeug (AC) festgelegt ist, bei dem mindestens ein Triebwerk ausgefallen ist, wobei die Abflugbahnen (T1, T2) es ermöglichen, Hindernisse (OB) zu überfliegen, die sich entlang ihrer jeweiligen Seitenprofile (TL1, TL2) befinden, wobei bei diesem Verfahren
a) Ausgangsdaten, die das Seitenprofil der Standard-Abflugbahn umfassen, Daten in Bezug auf die Umgebung des Abflughafens und nominale Abflugbedingungen erzeugt werden;
b) mit Hilfe der Ausgangsdaten, eine Hilfs-Abflugbahn (T2) sowie Hindernisse (OB) bestimmt werden, die bei nominalen Abflugbedingungen überfliegbar sind; und
c) die Ergebnisse der in Schritt b) durchgeführten Verarbeitungen einem Benutzer vorgelegt werden,
**dadurch gekennzeichnet, dass** Schritt b) vollkommen automatisch durchgeführt wird und dass in Schritt b) eine Optimierung durchgeführt wird, um eine optimale Hilfs-Abflugbahn (T2) zu erhalten unter Berücksichtigung von verschiedenen Abflugbedingungen sowie von zusätzlichen Hindernissen (OB), die bei nicht nominalen Abflugbedingungen überfliegbar sind.

2. Verfahren nach Anspruch 1,
**dadurch gekennzeichnet, dass** bei Schritt b) die folgenden Schritte automatisch durchgeführt werden:
b1) ausgehend von dem Seitenprofil der Standard-Abflugbahn werden eine maximale Ausgangsmasse und charakteristische Ausgangsgeschwindigkeiten bestimmt, die es ermöglichen, einen Abflug auf der Standard-Abflugbahn durchzuführen;
b2) mit Hilfe eines ersten Auswerteelements (14) werden eine maximale Abflugmasse und zugeordnete charakteristische Geschwindigkeiten in Bezug auf eine vorgegebene Hilfsbahn und auf nominale Bedingungen sowie kritische Hindernisse bei diesen nominalen Bedingungen bestimmt, wobei das erste Auswerteelement (14) zu diesem Zweck die maximale Ausgangsmasse und die charakteristischen Ausgangsgeschwindigkeiten sowie einen zusätzlichen Hindernissatz und Steuerungssollwerte, die eine Hilfs-Abflugbahn beschreiben, verwendet;
b3) das erste Auswerteelement (14) wird in ein zweites Auswerteelement (13) integriert, das es ermöglicht, die Gesamtheit der kritischen Hindernisse bei Pannen zu identifizieren, die zwischen einer kritischen Geschwindigkeit und der Geschwindigkeit im Divergenzpunkt bei der Hilfs-Abflugbahn und bei der Divergenzgeschwindigkeit bei der Standard-Abflugbahn auftreten; und
b4) eine Optimierung wird durchgeführt, indem die in Schritt b2) verwendete Hilfs-Abflugbahn verändert wird, und zwar solange, bis eine optimale Hilfs-Abflugbahn (T2) erhalten wird.

3. Vorrichtung nach einem der Ansprüche 1 und 2, **dadurch gekennzeichnet, dass**, um Schritt b) durchzuführen, Verarbeitungsmittel vom genetischen Typ verwendet werden.

4. Verfahren nach einem der vorhergehenden Ansprüche, **dadurch gekennzeichnet, dass** mit Hilfe der optimalen Hilfs-Abflugbahn und der Hindernisse, die überfliegbar sind, die entsprechende maximale Masse beim Abflug berechnet wird.

5. Vorrichtung zum Bestimmen mindestens einer Hilfs-Abflugbahn (T2) eines Flugzeugs (AC), mit der die Masse beim Abflug des Flugzeugs (AC) maximiert werden kann, wobei die Hilfs-Abflugbahn (T2) ein Seitenprofil (TL2) aufweist, das gekrümmt ist und an einem Divergenzpunkt (PV) von einer Standard-Abflugbahn (T1), die ein Seitenprofil (TL1) aufweist und die für ein Flugzeug (AC) festgelegt ist, bei dem alle Triebwerke normal funktionieren, divergiert, wobei die Hilfs-Abflugbahn (T2) ihrerseits für ein Flugzeug (AC) festgelegt ist, bei dem mindestens ein Triebwerk ausgefallen ist, wobei die Abflugbahnen (T1, T2) es ermöglichen, Hindernisse (OB) zu überfliegen, die sich entlang ihrer jeweiligen Seitenprofile (TL1, TL2) befinden, wobei die Vorrichtung (1) Folgendes umfasst:
- erste Mittel (3), um Ausgangsdaten, die das Seitenprofil der Standard-Abflugbahn umfassen, Daten in Bezug auf die Umgebung des Abflughafens und nominale Abflugbedingungen zu erzeugen;
- zweite Mittel (4), um mit Hilfe der Ausgangsdaten, eine Hilfs-Abflugbahn (T2) sowie Hindernisse (OB), die bei nominalen Abflugbedingungen überfliegbar sind, zu bestimmen; und
- dritte Mittel (7), um einem Benutzer die Ergebnisse der Verarbeitungen vorzulegen, die durch die zweiten Mittel (4) durchgeführt wurden,
**dadurch gekennzeichnet, dass** die zweiten Mittel (4) vollkommen automatisch sind und dass die zweiten Mittel (4) Elemente (12) umfassen, um eine Optimierung durchzuführen, derart, dass eine optimale Hilfs-Abflugbahn (T2) erhalten wird unter Berücksichtigung von verschiedenen Abflugbedingungen sowie von zusätzlichen Hindernissen (OB), die bei nicht nominalen Abflugbedingungen überfliegbar sind.
